# EUROPEAN PATENT APPLICATION

(11) **EP 4 624 731 A1**
(43) Date of publication of application: **01.10.2025**
(21) Application number: 24167865.5
(22) Date of filing: 29.03.2024
(51) Int. Cl.: F01P 5/10, F01P 7/16, F01P 11/04, B60K 11/02, H01M 10/60

(54) **A THERMAL MANAGEMENT MODULE**

(71) Applicant: VALEO SYSTEMES THERMIQUES, 78320 Le Mesnil Saint-Denis (FR)
(72) Inventor: GUT, Damian, 32 050 Skawina (PL); NOWAKOWSKI, Adrian, 32 050 Skawina (PL); GAMEIRO, Mickael, 78322 Le Mesnil-Saint-Denis Cedex (FR); PIETRZAK, Lukasz, 32 050 Skawina (PL)
(74) Representative: Valeo Powertrain Systems

(57) **Abstract**

A thermal management module (100), in particular, for a vehicle comprises a fluid hub (20), at least a portion of a multi-way valve housing (23a) and at least a portion of a pump housing (42). The fluid hub (20) comprising at least one hub housing (22) formed with a plurality of fluid flow channels (24a, 24b). At least a portion of the multi-way valve housing (22) is in fluid communication with at least one fluid flow channel (24a, 24b). At least a portion of a pump housing (42), especially the pump volute, is in fluid communication with at least one fluid flow channel (24a, 24b). At least one of the fluid hub housing (23a), the portion of the multi-way valve housing (22), the portion of the pump housing (42) is integrally formed with at least one gasket (50).

## Description

### TECHNICAL FIELD

The present invention relates to a thermal management module, more particularly, the present invention relates to a thermal management module for controlling fluid flow through vehicle heat exchangers.

### BACKGROUND

Generally, a thermal management module includes a fluid hub, at least a portion of the multi-way valve housing and at least a portion of a pump housing. The thermal management module further comprises a surge tank, at least one fluid machine, for example, at least one fluid pump. Generally, the fluid hub comprises a hub housing that is formed by joining two portions of plastic material by plastic welding, wherein at least one portion is configured with fluid flow channels that define the fluid flow passages when the first and second portions are joined to each other. The fluid flow channels are configured to be fluidly coupled to vehicle coolant circuit that is in fluid communication with at least one vehicle heat exchanger. Further, the fluid hub housing configures at least a portion of the multi-way valve controlled by a controller to selectively disrupt or establish fluid flow to the fluid flow channels. The fluid flow channels are in fluid communication with different cooling circuits for regulating fluid supply to the vehicle heat exchangers based on operating configuration of the multi-way valve that can be changed based requirement. More specifically, the multi-way valve selectively configures fluid communication with at least one of several cooling circuits to direct one or more cooling fluids through the different cooling circuits to achieve different cooling based on requirements, while still maintaining fluid isolation between the cooling fluids flowing through the different cooling circuits. The fluid pump adapted to circulate fluid through the fluid flow passages and the vehicle heat exchangers through the vehicle coolant circuits to configure fluid communication between the fluid hub and the vehicle heat exchangers.

The fluid pumps drives the flow through the different cooling circuits that are configured based on operating configuration of the multi-way valve configured in the fluid hub. The fluid hub receives fluid stored in the surge tank and selectively supplies the cooling fluids to the different heat exchangers through the different cooling circuits configured based on the operative configuration of the multi-way valve in the fluid hub. One of the vehicle heat exchangers is the chiller. The first and second portions of the fluid hub include respective mounting holes that are aligned with respect to each other to configure through holes for passage of mounting bolts for mounting the fluid hub on the vehicle frame.

The fluid hub includes a fluid hub housing, wherein at least a portion of the fluid hub housing forms at least a portion of the multi-way valve. Particularly, at least a portion of the fluid hub housing forms multi-way valve housing formed with connector ports and channels formed thereon. The multi-way valve housing receives a bushel that rotates within the multi-way valve housing to define fluid flow to the connector ports and the channels based on angular position of the bushel within the multi-way valve housing. The bushel is received inside the multi-way valve housing through a closable opening formed on the multi-way valve housing. An actuator is functionally coupled to and drives the bushel received within the multi-way valve housing. An actuator housing or a separate cover is secured to the portion of the multi-way valve housing around the closable opening to cover the closable opening. Generally a gasket is disposed between actuator housing or the cover and the portion of the multi-way valve housing around the closable opening to form sealing connection between the multi-way valve housing and the actuator housing or the cover to prevent leakage from the multi-way valve housing. The fluid hub housing further includes mounting apertures or holed columns for mounting the fluid pumps, the vehicle heat exchangers such as chiller and other fluid machines thereon. The fluid pumps are in fluid communication with the fluid flow channels and the connector ports to direct fluid to the heat exchangers. Accordingly, the connection between the pumps and the fluid hub is required to be leak-proof. Generally, a gasket is disposed between a pump housing and a portion of the fluid hub housing where the pump is mounted to form sealing connection between the pump housing and the fluid hub housing. Generally, the mounting holes receive dampers for preventing vibration from the vehicle frame from reaching the delicate fluid machines such as the pumps mounted on the fluid hub. Particularly, the fluid hub acts as a structural component for mounting the fluid pumps thereon.

However, assembly of the gaskets between the actuator housing or cover and portion of the multi-way valve housing around the closable opening and/ or between the pump housing and pump mounting portion of the fluid hub housing is complicated and time consuming. Particularly, the gasket is required to be aligned with respect to the closable opening formed on the fluid hub housing on one side and the also with respect to the actuator housing and the pump housing on the other side. Further, the gasket being a loose component is prone to being misplaced and the actuator housing and / or the pump housing are mounted on the fluid hub housing without the gasket being disposed between the fluid hub housing and the actuator housing and/ or the pump housing, thereby leading to leakage issues. Furthermore, the gasket is prone to be displaced from its position and becomes ineffective in preventing leakage. Further, the gasket is inefficient in forming sealing connection between the fluid hub housing and the actuator housing and/ or the pump housing. Still further, the conventional gaskets are prone to damage and require frequent replacements due to pinching issues. Furthermore, the connection between fluid hub housing and the actuator housing and / or pump housing in case of conventional thermal management modules face leakage issues causing pressure drop and losses.

Accordingly, there is a need for a thermal management module, wherein the actuator housing, pump housing and other fluid machines can be conveniently mounted on a fluid hub housing with efficient sealing between the fluid hub housing and the actuator housing, pump housing and other fluid machines. Further, there is a need for a thermal management module that is reliable. Furthermore, there is a need for a thermal management module that involves fewer loose components, thereby reducing the chances of misplacement of such components. Still further, there is a need for a thermal management module that efficiently addresses the leakage issues and problems such as pressure drop and other issues arising due to leakage issues.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### SUMMARY

A thermal management module, in particular, for a vehicle is disclosed in accordance with an embodiment of the present invention. The thermal management module comprising a fluid hub, at least a portion of the multi-way valve housing and at least a portion of a pump housing. The fluid hub comprising at least one hub housing formed with a plurality of fluid flow channels. At least a portion of the multi-way valve housing is in fluid communication with at least one fluid flow channel. At least a portion of a pump housing, especially the pump volute, is in fluid communication with at least one fluid flow channel. At least one of the fluid hub housing, the portion of the multi-way valve housing, the portion of the pump housing is integrally formed with at least one gasket.

Generally, the fluid flow channels are configured to be fluidly coupled to at least one vehicle coolant circuit that is in fluid communication with at least one vehicle heat exchanger.

Particularly, the multi-way valve housing forms at least a portion of one multi-way valve, the multi-way valve and connector ports together define and regulate fluid supply to at least one of the coolant circuits to configure selective fluid communication between the vehicle coolant circuit and the fluid hub.

Further, the thermal management module comprises an actuator received in an actuator housing. The actuator adapted to drive a bushel of the multi-way valve received inside the multi-way valve housing through a closable opening formed on the multi-way valve housing.

Furthermore, the thermal management module comprises at least a portion of at least one fluid pump, particularly, pump volute received in corresponding pump housing mounted on and in fluid communication with the fluid hub housing. The fluid pump adapted to circulate fluid through the fluid flow passages and the vehicle heat exchanger through the vehicle coolant circuit to configure fluid communication between the fluid hub and the vehicle heat exchanger.

In accordance with another embodiment, the actuator housing is integrally formed with at least one gasket.

Preferably, the gasket is over-molded with respect to at least one of the portion of the multi-way valve housing and the portion of the pump housing.

Alternatively, the gasket is over-molded with respect to the actuator housing.

Particularly, the fluid hub housing comprises a first portion. The first portion comprises the multi-way valve housing, pump mounting portions, a first set of fluid flow channels corresponding to the multi-way valve and a first set of connector ports.

Further, the fluid hub housing comprises a second portion. The second portion comprises a second set of fluid flow channels and a second set of connector ports.

Specifically, portions of the fluid hub housing at the interface between fluid hub housing and at least one of the actuator housing and the pump housing is integrally formed with the gasket.

Generally, the bushel is adapted to move within the multi-way valve housing corresponding to the multi-way valve to selectively establish or disrupt fluid communication between different connector ports based on relative position of the bushel inside the multi-way valve housing.

Preferably, a first gasket integrally formed on the fluid hub housing is adapted to form sealing connection between the actuator housing and at least one of portion of fluid hub housing and the first fluid flow channels corresponding to the multi-way valve.

Specifically, the first gasket comprises multiple closed loops interconnected to each other.

More specifically, a first loop is arranged along the closable opening and the remaining loops are arranged along periphery of the first loop and along the first set of fluid flow channels corresponding to the multi-way valve.

Generally, the actuator housing is mounted on the fluid hub housing by means of first set of bolts with the first gasket disposed between the actuator housing and the fluid hub housing.

Further, a second gasket integrally formed on the fluid hub housing is adapted to form sealing connection between the pump housing and the pump mounting portion of the fluid hub housing.

Generally, the pump housing is mounted on pump mounting portions of the fluid hub housing by means of a second set of bolts with the second gasket disposed between the pump housing and the fluid hub housing.

Particularly, the fluid hub housing is of plastic material and the gasket is of rubber.

Generally, the actuator housing comprises an actuator enclosing portion and a cover portion that covers an open end of the actuator enclosing portion on one side and the closable opening on the opposite side thereof.

Specifically, the cover portion is mounted on the fluid hub housing by means of the first set of bolts with the first gasket disposed between the cover portion and the fluid hub housing.

In accordance with an embodiment of the present invention, the heat exchanger is a chiller adapted to cool fluid received from the fluid pump for circulation through the heat generating components disposed in the vehicle.

In accordance with another embodiment of the present invention the gasket is a "cured in place" gasket.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of a thermal management module comprising at least one actuator, at least one pump and a fluid hub in accordance with an embodiment of the present invention.
FIG. 2 illustrates another isometric view of the thermal management module of FIG. 1.
FIG. 3 illustrates exploded view of the thermal management module of FIG. 1.
FIG. 4 illustrates an isometric view of the fluid hub of the thermal management system of FIG. 1.
FIG. 5 illustrates another isometric view of the fluid hub of FIG. 4.
FIG. 6 illustrates an isometric view of a first portion of the fluid hub housing of FIG. 4 with a bushel received within a multi-way valve housing formed in the first portion, also is depicted an enlarged view depicting a gasket integrally formed along periphery of a closable opening.
FIG. 7 illustrates an isometric view of the bushel of the FIG. 6.
FIG. 8 illustrates an isometric view of a cover portion of an actuator housing of the thermal management system FIG. 2.
FIG. 9 illustrates another isometric view of the cover portion of FIG. 8.
FIG. 10 illustrates a sectional view of the fluid hub housing depicting a first gasket integrally formed with the fluid hub housing sandwiched between the fluid hub housing and the cover portion, also is depicted a second gasket integrally formed with the fluid hub housing to be sandwiched between the fluid hub housing and a pump housing.
FIG. 11 illustrates a sectional view depicting a "cured in place" gasket disposed on the fluid hub housing before assembly of a cover portion of an actuator housing to the first portion.
FIG. 12 illustrates a sectional view depicting the "cured in place" gasket of FIG. 11 sandwiched between the cover portion and the first portion of the fluid hub housing after assembly of the cover portion to the fluid hub housing.

It must be noted that the figures disclose the invention in a detailed enough way to be implemented, said figures helping to better define the invention if needs be. The invention should however not be limited to the embodiment disclosed in the description.

### DETAILED DESCRIPTION

The present invention is explained with example of a thermal management module, particularly, for a vehicle. The thermal management module comprising a fluid hub, at least a portion of the multi-way valve housing and at least a portion of a pump housing. The fluid hub comprising at least one hub housing formed with a plurality of fluid flow channels. At least a portion of the multi-way valve housing is in fluid communication with at least one fluid flow channel. At least a portion of a pump housing, especially, the pump volute, is in fluid communication with at least one fluid flow channel. At least one of the fluid hub housing, the portion of the multi-way valve housing, the portion of the pump housing is integrally formed with at least one gasket. The fluid hub housing comprises the multi-way valve housing and is configured with connector ports. The fluid flow channels configured to be fluidly coupled to a vehicle coolant circuit. The vehicle coolant circuit is in fluid communication with at least one vehicle heat exchanger. The thermal management module further comprises an actuator that drives a rotatable bushel received inside the multi-way valve housing to define fluid flow to the vehicle cooling circuit and heat exchangers based on fluid flow through different connector ports and fluid flow channels based on angular position of the bushel inside the multi-way valve housing. The thermal management module further comprises fluid pumps, particularly, coolant pumps for supplying cooling coolant to the vehicle heat exchanger, particularly, the chiller that extracts heat from a vehicle battery, for example, battery of an electric vehicle. The fluid pump is received within the pump housing and drives the fluid flow through the cooling circuit configured based on operating configuration of the multi-way valve of the fluid hub. The actuator, the fluid pumps and other fluid machines are mounted on the fluid hub housing to save space and render the thermal management system compact.

Generally, gaskets are disposed between the fluid hub housing and at least one of the actuator housing, the fluid pump housing and other fluid machines to form sealing connection between the fluid hub housing and at least one of the actuator housing, the fluid pump housing and other fluid machines. In accordance with the present invention, the gasket is integrally formed with at least one of the fluid hub housing, the actuator housing and the fluid pump housing. Such configuration of integrally formed gasket reduces the number of lose components, renders the thermal management system reliable, convenient to assemble and addresses leakage issues. Although, the present invention is explained with example of thermal management module for a vehicle, wherein gaskets configuring sealing connection between assembled components is integrally formed with one of the components, however, the present is also applicable for other vehicular and non-vehicular environments wherein it is required to conveniently form efficient sealing connection between components in fluid communication with each other with reduced assembly time, effort and number of loose components.

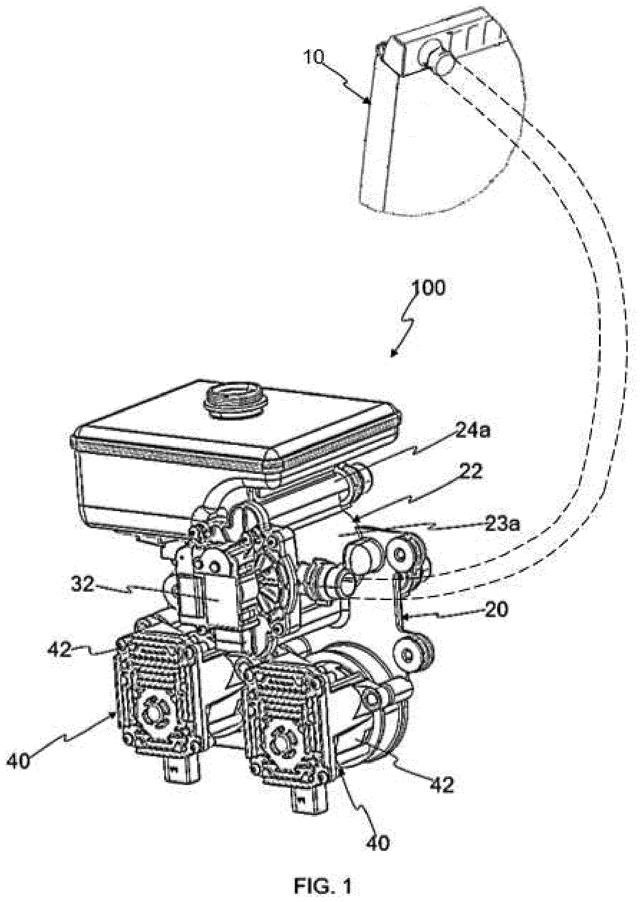

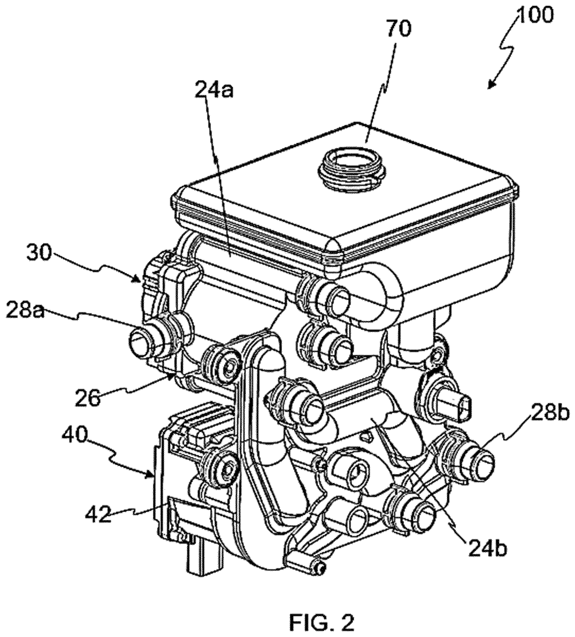

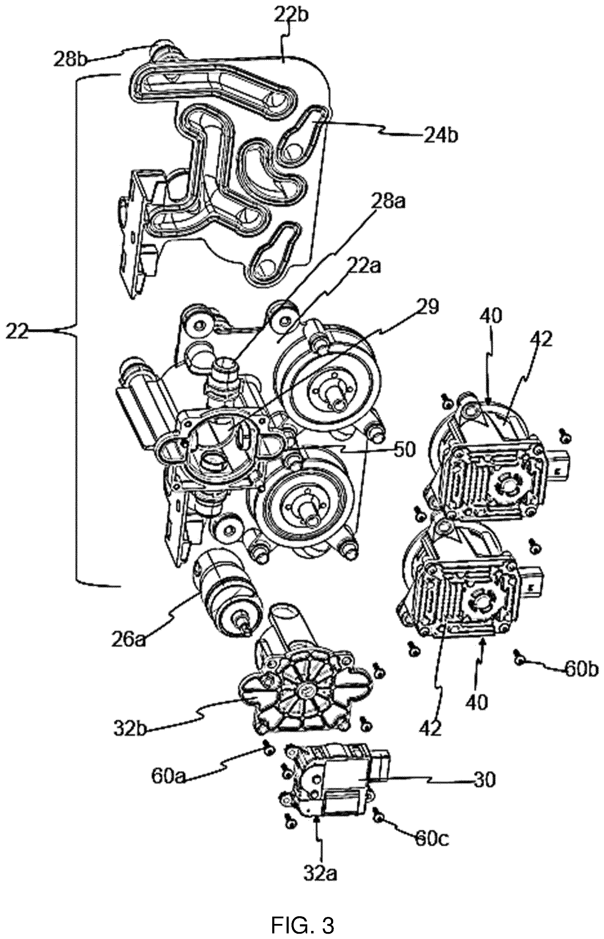

FIG. 1 - FIG. 2 illustrate different isometric views of a thermal management module 100 in accordance with an embodiment of the present invention. FIG. 3 illustrates an exploded view of the thermal management module 100. The thermal management module 100 includes a fluid hub 20, particularly, a coolant hub 20, at least a portion of multi-way valve housing 23a and at least a portion of a pump housing 42. The thermal management module 100 further comprises an actuator 30 and at least one fluid pump 40.

The vehicle heat exchanger 10 is at least one of the chiller, a radiator, a heater core, and a cooler for power electronics. However, the present invention is not limited to any particular configuration, number and placement of the vehicle heat exchanger 10.

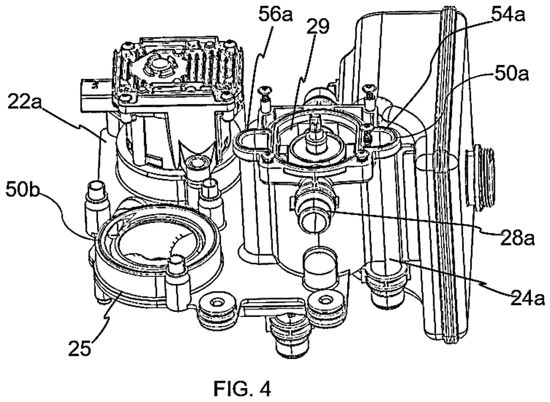

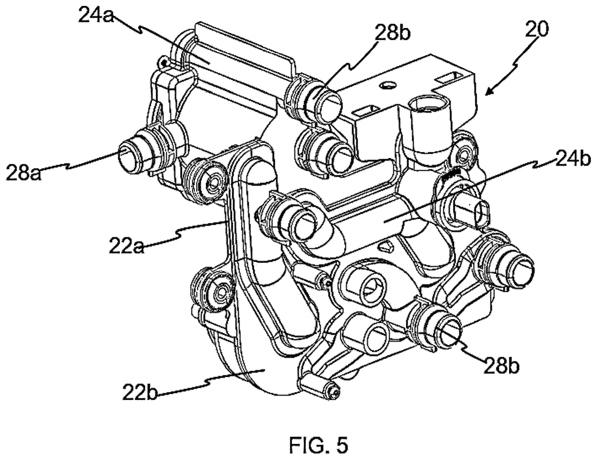

FIG. 4 and FIG. 5 illustrate different isometric views of the fluid hub 20. The fluid hub 20 is of plastic material. The fluid hub 20 comprises a fluid hub housing 22 formed with a plurality of fluid flow channels 24, at least a portion of a multi-way valve 26 and connector ports 28 for defining and regulating fluid supply to the vehicle heat exchanger 10 to configure selective fluid communication between the fluid hub 20 and the vehicle heat exchanger 10. The fluid flow channels 24 are configured to be fluidly coupled to vehicle coolant circuit that is in fluid communication with at least one vehicle heat exchanger 10.

Referring to the FIG. 3, the fluid hub housing 22 comprises a first portion 22a and a second portion 22b assembled to each other. The first portion 22a is formed with a multi-way valve housing 23a forming at least a portion of one multi-way valve 26. The first portion 22a further comprises pump mounting portions 25, a first set of fluid flow channels 24a corresponding to the multi-way valve 26 and a first set of connector ports 28a. The second portion 22b comprises a second set of fluid flow channels 24b and a second set of connector ports 28b. Generally the second portion 22b is a planar component formed with protrusions. More specifically, the second set of fluid flow channels 24b are formed between protrusions formed on the second portion and closing face of the first portion 22a when the first portion 22a and the second portion 22b are assembled to each other. The fluid hub 20 configures at least a portion of the multi-way valve 26 to selectively establish and disrupt internal fluid flow passages to define several cooling circuits. Generally, one or more cooling fluids are routed through the different cooling circuits bases on operative configuration of the multi-way valve 26 to achieve different cooling based on requirements, while still maintaining fluid isolation between the cooling fluids flowing through the cooling circuits.

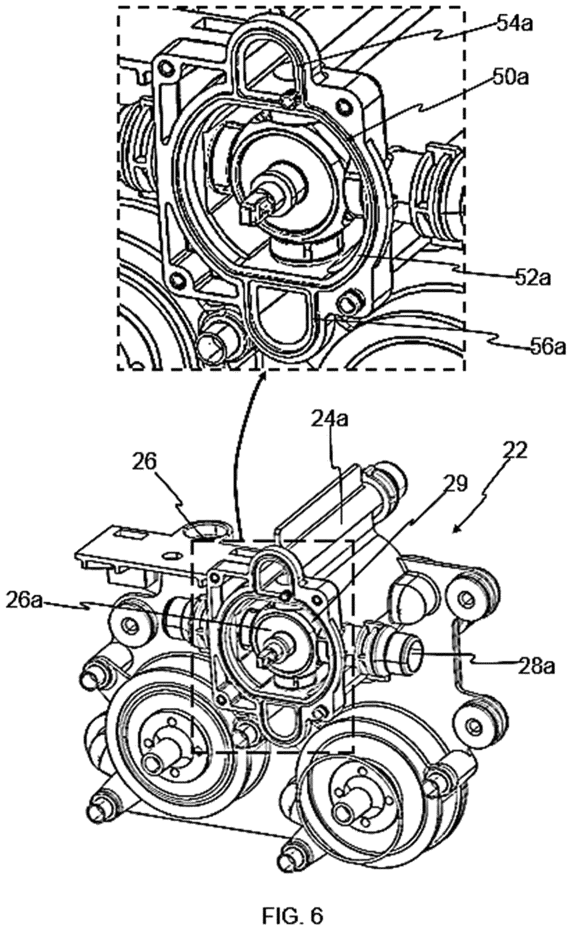

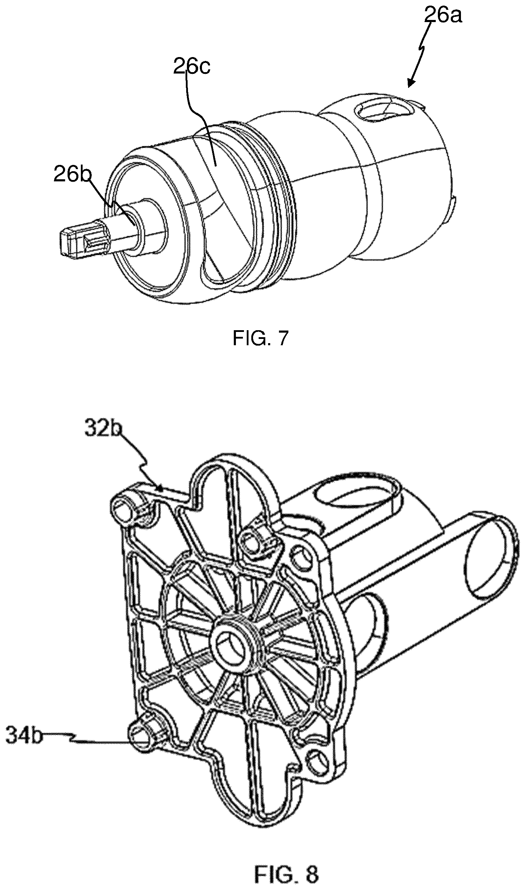

Referring to the FIG. 6, a portion of the fluid hub housing 22 comprises the multi-way valve housing 23a and a bushel 26a is rotatably received within the multi-way valve housing 23a. The multi-way valve housing 23a forms at least a portion of a multi-way valve 26. The portion of the fluid hub housing 22 comprising the multi-way valve housing 23ais further formed with the first set of fluid flow channels 24a and the first set of connector ports 28a. The multi-way valve 26 and the connector ports 28a, 28b define and regulate fluid supply to at least one of the coolant circuits to configure selective fluid communication between the vehicle coolant circuit and the fluid hub 20. The bushel 26a as illustrated in FIG. 7 is adapted to move within the portion of the fluid hub housing 22 corresponding to the multi-way valve 26 to selectively define fluid flow to the fluid flow channels 24a and the first connector ports 28a. With such configuration, the multi-way valve 26 selectively establishes or disrupts fluid communication between different connector ports 28 based on relative position of the bushel 26a inside the multi-way valve housing. Accordingly, the multi-way valve 26 selectively configures fluid communication between the fluid hub 20 and the vehicle heat exchangers 10.

The actuator 30 received within an actuator housing 32 is adapted to drive the bushel 26a of the multi-way valve 26. The actuator 30 and the actuator housing 32 are disposed outside the multi-way valve housing, whereas the bushel 26a is received inside the multi-way valve housing. More specifically, the bushel 26a is received inside the multi-way valve housing defined by the fluid hub housing 22 through a closable opening 29 formed on the fluid hub housing 22. Referring to FIG. 7, the bushel 26a includes an axle 26b connected to the actuator 30 that drives the bushel 26a inside the multi-way valve housing formed in the first portion 22a. The bushel 26a further includes cutouts 26c formed thereon that get aligned to different first fluid flow channels 24a and the first connector ports 28a based on the angular position of the bushel 26a inside the multi-way valve housing to configure internal fluid flow passages. Such configuration of the bushel 26a moving within the multi-way valve housing to define a plurality of fluid flow passages within the multi-way valve 26 for defining and regulating coolant supply to the vehicle heat exchanger 10 disposed downstream of the multi-way valve 26. This way the multi-way valve 26 configures selective fluid communication between the fluid hub 20, particularly, coolant hub and the vehicle heat exchanger 10. More specifically, the multi-way valve 26 configures fluid communication between the fluid hub 20 and the heat exchangers 10 based on operating configuration of the multi-way valve 26. Generally, the fluid flow through the internal fluid flow passages within the multi-way valve 26 is regulated by controlling relative movement of the bushel 26a within the multi-way valve housing by a control unit. More specifically, the bushel 26a rotates within the multi-way valve housing to selectively establish and disrupt fluid flow through the internal fluid flow passages and define operating configuration of the multi-way valve 26.

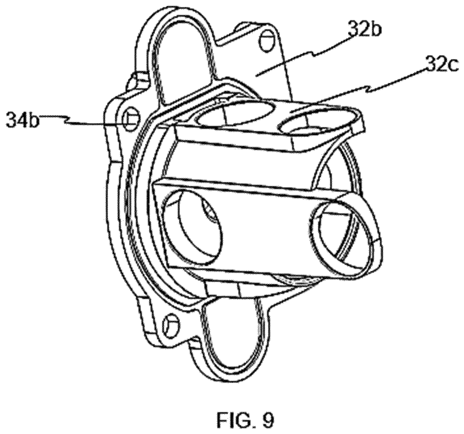

The actuator housing 32 is mounted on the fluid hub housing 22 by means of a first set of bolts 60a with the gasket 50 disposed between the actuator housing 32 and the fluid hub housing 22. Such arrangement forms sealing connection between the actuator housing 32 and a portion of the fluid hub housing 22 around the closable opening 29 of the multi-way valve 26, particularly, the multi-way valve housing 23a. The actuator housing 32 is mounted on the fluid hub housing 22 in overlapping configuration with respect to the closable opening 29 to cover the closable opening 29. The sealing connection between the actuator housing 32 and the portion of fluid hub housing 22 around the closable opening 29 is required to be air tight to prevent leakage of fluid from the multi-way valve 26. Generally, the actuator housing 32 comprises an actuator-enclosing portion 32a and a cover portion 32b as illustrated in FIG. 8 and FIG. 9 that covers an open end of the actuator-enclosing portion 32a on one side and the closable opening 29 on the opposite side thereof. More specifically, the cover portion 32b is mounted on the fluid hub housing 22 by means of the first set of bolts 60a with the gasket 50a disposed between the cover portion 32b and the portion of fluid hub housing 22, particularly, portion of the multi-valve housing 23a around the closable opening 29 of the multi-way valve 26. The cover portion 32b overlaps the closable opening 29. The actuator housing 32 further comprises web portions 32c extending opposite to the actuator-enclosing portion 32a and formed with apertures aligned with the first set of ports 28a.

Further, at least a portion of at least one fluid pump 40 is received in corresponding pump housing 42, particularly pump volute. The fluid pump 40 is in fluid communication with the fluid hub 20 on one side and with the vehicle heat exchanger 10 on the other side. The pump housing 42 is mounted on the fluid hub housing 22. The fluid pump 40 adapted to circulate fluid through the fluid flow channels 24 and the vehicle heat exchanger 10 for configuring fluid communication between the fluid hub 20 and the vehicle heat exchanger 10. More specifically, the fluid pumps 40 are for circulation of coolant through the second fluid flow channels 24b that are in fluid communication with the vehicle heat exchangers 10 through the second connector ports 28b. The pump housing 42 is mounted on pump mounting portion 25 of the fluid hub housing 22 by means of a second set of bolts 60b with the second gasket 50b disposed between the pump housing 42 and the fluid hub housing 22 to form sealing connection between the pump housing 42 and the pump mounting portion 25 of fluid hub housing 22. The sealing connection between the pump housing 42 and the pump mounting portion of the fluid hub housing 22 is required to be air tight to prevent leakage of fluid from the pump housing 42.

Generally, the conventional thermal management system utilizes gaskets disposed between various components thereof to configure sealing connection between the various components. Specifically, a gasket is disposed between the fluid hub housing 22 and at least one of the actuator housing 32, the pump housing 42 and other fluid machines mounted on the fluid hub housing. However, the gasket being a lose component is prone to get misplaced and the actuator housing, the pump housing and other fluid machines are mounted on the fluid hub housing 22 without the gasket. In the absence of the gasket between the fluid hub housing 22 and at least one of the actuator housing 32, the pump housing 42 and other fluid machines, there are leakage issues causing inefficient performance of heat exchangers and reliability issues. The loosely placed gasket is also prone to be misplaced from its position and damage due to pinching issues, thereby furthering the problem of inefficient sealing.

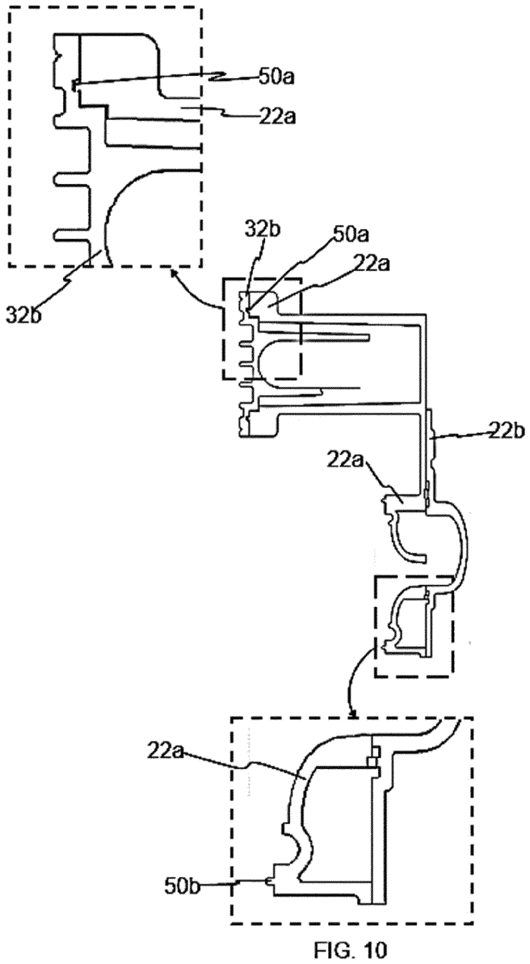

In order address to the above problems, the at least one of the fluid hub housing 22, the actuator housing 32 and the pump housing 42 is integrally formed with at least one gasket 50. Generally, the gasket 50 is over-molded with respect to at least one of the fluid hub housing 22, the actuator housing 32 and the pump housing 42. Specifically, the gasket 50 is over-molded with respect to at least one of the portion of the multi-way valve housing 23a and the portion of the pump housing 42. In accordance with an embodiment of the present invention, portions of the fluid hub housing 22 at the interface between fluid hub housing 22 and at least one of the actuator housing 32 and the pump housing 42 are integrally formed with the gaskets 50. Generally, the fluid hub housing 22 is of plastic material and the gasket 50 is of rubber material. The present invention is not limited to any particular material of the gasket as far as the gasket can be over-molded with respect to the fluid hub housing 22 to be integrally formed therewith to configure sealing connection between the fluid hub housing 22 and at least one of the actuator housing 32, the pump housing and other fluid machine. In accordance with an embodiment of the present invention, the gasket 50 is over-molded with respect to the portions of the fluid hub housing 22 at the interface between fluid hub housing 22 and at least one of the actuator housing 32, the pump housing 42 and other fluid machines mounted on the fluid hub housing 22. FIG. 10 illustrates a sectional view of the fluid hub housing 22 depicting a first gasket 50a integrally formed with the fluid hub housing 22 and sandwiched between the fluid hub housing 22 and the cover portion 32b. Further, the FIG. 10 also depicts a second gasket 50b integrally formed with the fluid hub housing 22 to be sandwiched between the fluid hub housing 22 and the pump housing 42.

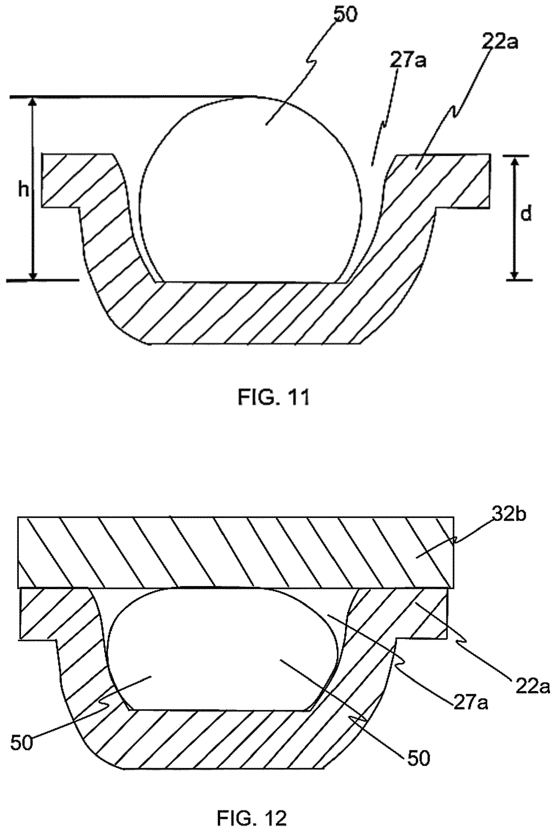

In accordance with another embodiment of the present invention, the gasket 50 is "cured in place" gasket. The "cured in place" gasket is applied to one of the components, particularly, a first component, particularly, the first portion 22a of the fluid hub housing 22 at the interface of the first and second components being assembled and allowed to be cured thereon. Thereafter, the second component, particularly, the cover portion 32b of the actuator housing 32 is assembled to the first component, the first portion 22a, on which the "cured in place" gasket had cured with the "cured in place" sandwiched between the first component, the first portion 22a and the second component, the cover portion 32b. FIG. 11 illustrates a sectional view depicting the "cured in place" gasket 50 disposed on the fluid hub housing, particularly, the first portion 22a of the fluid hub housing 22 before assembly of the cover portion 32b of the actuator housing 32 to the first portion 22a. FIG. 12 illustrates a sectional view depicting the "cured in place" gasket 50 of FIG. 11 sandwiched between the cover portion 32b and the first portion 22a of the fluid hub housing 22 after assembly of the cover portion 32b to the fluid hub housing 22.

In accordance with an embodiment of the present invention, the first portion 22a of the fluid hub housing 22 along the closable opening 29 is formed with a groove 27a to retain the "cured in place" gasket 50 for being cured therein. The dimension of the gasket 50, particularly, the height "h" of the cured gasket 50 is more than depth 'd" of the groove 27a. Preferably, the ratio of the d/h is in the range of 0.6 to 0.8. In accordance with an embodiment, the ratio of d/h is in the ratio 0.7. The ratio of the d/h is in dependent on the material of the gasket 50. Specifically, the gasket 50 extends beyond an abutting surface of the first portion 22a and the cover portion 32b upon being cured and is compressed between the cover portion 32b and the first portion 22a when the cover portion 32b is assembled to the first portion 22a as illustrated in FIG. 12. In another embodiment of the present invention, the groove is formed on the cover portion 32b to retain the "cured in place" gasket 50 for being cured therein. Irrespective of whether the gasket 50 is cured on the first portion 22a of the fluid hub housing 22 or the cover portion 32b, the cross sectional area of the groove 27a is greater than the cross-sectional area of the gasket 50 received and cured therein. Such configuration of the groove 27a allows the groove 27a to accommodate the gasket 50 after the gasket 50 is compressed between the cover portion 32b and the first portion 22a. More specifically, such configuration of the groove 27a accommodates the gasket 50 as the gasket 50 expands radially outwards when the gasket 50 is compressed between the cover portion 32b and the first portion 22a as the cover portion 32b is mounted on the first portion by means of the first set of bolts 60a.

Generally, many steps involved in deploying and curing of the "cured in place" gasket 50 inside the groove 27a formed on the first portion 22a. More specifically, the first portion 22a is placed in upright position with the groove 27a facing upward. Thereafter, the "cured in place" gasket 50 in paste form is deployed in the groove 27a by using a sealing dispenser. The Liquid Silicone Rubber can be used as the material for the "cured in place" gasket 50. More specifically, the sealing dispenser moves along the closable opening 29 and relative to the first portion 22a to deploy the "cured in place" gasket 50 in the paste form in the groove 27a. Thereafter, the "cured in place" gasket 50 received and retained in the groove 27a is cured by subjecting the "cured in place" gasket 50 to Ultra violet radiations by using an ultra violet radiator. After being cured, the "cured in place" gasket 50 adheres on the surface of the groove 27a and the adhered portion forms a complete seal between the "cured in place" gasket 50 and the groove 27a. The "cured in place" gasket 50 has elasticity and deforms to conform to the shape of the groove 27a as the cover portion 32b is mounted on the first portion 22a. The concept of "cured in place" gasket is well known in the art hence is not described in detail in the present document for the sake of brevity of the present document. However, the present invention is not limited to the way of integrally forming the gasket 50 with respect to the portions of the fluid hub housing 22 at the interface between fluid hub housing 22 and at least one of the actuator housing 32, the pump housing 42 and other fluid machines mounted on the fluid hub housing 22. With such configuration of the gasket integrally formed on the fluid hub housing 22 either by over-molding or by virtue of the gasket being "cured in place", effective sealing is achieved between one side of the gasket and one of the assembled components to which the gasket is integrally formed. Such configuration of the gasket integrally formed with one of the components being assembled provides improved sealing as leakage is possible from one side of the gasket compared to conventional arrangement of the gasket freely placed between the components assembled wherein leakage can occur from both sides of the gasket.

Generally, multiple gaskets 50a and 50b are disposed between the portions of the fluid hub housing 22 at the interface between fluid hub housing 22 and at least one of the actuator housing 32, the pump housing 42 and other fluid machines mounted on the fluid hub housing 22. Specifically, the first gasket 50a integrally formed on the fluid hub housing 22 is adapted to form sealing connection between the actuator housing 32, particularly, the cover portion 32b of the actuator housing 32 and at least one of portion of fluid hub housing 22 and the first fluid flow channels 24a corresponding to the multi-way valve 26. The first gasket 50a is integrally formed on the portion of fluid hub housing 22 along the closable opening 29. More specifically, the first gasket 50a comprises multiple closed loops 52a, 54a, 56a interconnected to each other. The first loop 52a is arranged along the closable opening 29 and forms sealing connection between the actuator housing 32, particularly, the cover portion 32b of the actuator housing 32 and periphery of the closable opening 29 to prevent leakage from the multi-way valve 26. The remaining loops 54a and 56a are arranged along periphery of the first loop 52a and along the first set of fluid flow channels 24a corresponding to the multi-way valve 26 to form sealing connection between the actuator housing 32, particularly, the cover portion 32b of the actuator housing 32 and the fluid flow channels 24a. Alternately, the first gasket 50a is integrally formed on the face of the cover portion 32b facing the closable opening 29. Further as illustrated in the FIG. 10, the second gasket 50b is integrally formed on the fluid hub housing 22, particularly, the first portion 22a is adapted to form sealing connection between the pump housing 42 and the pump mounting portion 25 of the fluid hub housing 22.

The surge tank 70 is adapted to store the coolant therein and is disposed at highest position relative to other components of the thermal management module 100 in a vertical direction when disposed in the vehicle, thereby creating a natural gradient of coolant flow from the surge tank 70 to the fluid hub 20. The fluid hub 20 controls fluid flow there-through by means of the internal fluid flow channels and multi-way valve 26 configured therein to define several cooling circuits. From the fluid hub 20, the fluid is directed to the fluid pumps 40. The fluid pumps 40 directs the fluid to the second fluid flow channels 24b and the second connector ports 28b.

In any case, the invention cannot and should not be limited to the embodiments specifically described in this document, as other embodiments might exist. The invention shall spread to any equivalent means and any technically operating combination of means.

### LIST OF REFERANCE NUMERALS

- 100 :: thermal management module
- 10 :: vehicle heat exchanger
- 20 :: fluid hub
- 22 :: fluid hub housing
- 22a :: first portion of fluid hub housing
- 22b :: second portion of fluid hub housing
- 23a :: portion of multi-way valve housing on first portion of fluid hub housing
- 24 :: fluid flow channels formed on the fluid hub housing
- 24a :: first fluid flow channels formed on first portion of fluid hub housing
- 24b :: second fluid flow channels formed on first portion of fluid hub housing
- 25 :: pump mounting portion of the fluid hub housing
- 26 :: multi-way valve
- 26a :: bushel of the multi-way valve
- 27a :: groove on the first portion of fluid hub housing
- 28a :: first set of ports formed on the first portion
- 28b :: second set of ports on the second portion
- 29 :: closable opening on the first portion of fluid hub housing
- 30 :: actuator
- 32 :: actuator housing
- 32a :: actuator enclosing portion
- 32b :: cover portion of the actuator housing
- 60a :: first set of bolts for mounting actuator housing on fluid hub housing
- 40 :: pump
- 42 :: pump housing
- 60b :: second mounting bolts for mounting pump housing on fluid hub housing

## Claims

1. A thermal management module (100), in particular for a vehicle, comprising:
- a fluid hub (20) comprising at least one hub housing (22a, 22b) formed with a plurality of fluid flow channels (24a, 24b),
- at least a portion of a multi-way valve housing (23a) in fluid communication with at least one fluid flow channel (24a, 24b),
- at least a portion of a pump housing (42), especially the pump volute, in fluid communication with at least one fluid flow channel (24a, 24b),
**characterized in that** at least one of the fluid hub housing (22), the portion of the multi-way valve housing, the portion of the pump housing (42) is integrally formed with at least one gasket (50).

2. The thermal management module (100) as claimed in the previous claim, wherein the fluid flow channels (24a, 24b) is configured to be fluidly coupled to at least one vehicle coolant circuit in fluid communication with at least one vehicle heat exchanger (10).

3. The thermal management module (100) as claimed in the previous claim, comprising a multi-way valve (26), wherein the multi-way valve housing forms at least a portion of said multi-way valve (26), the multi-way valve (26) and connector ports (28a, 28b) define and regulate fluid supply to at least one of the coolant circuits to configure selective fluid communication between the vehicle coolant circuit and the fluid hub (20).

4. The thermal management module (100) as claimed in the previous claim, further comprising an actuator (30) and an actuator housing (32), the actuator (30) being received in an actuator housing (32) and adapted to drive a bushel (26a) of the multi-way valve (26) received inside the multi-way valve housing through a closable opening (29) formed on the multi-way valve housing.

5. The thermal management module (100) as claimed in the previous claim, wherein the actuator housing (32) is integrally formed with at least one gasket (50).

6. The thermal management module (100) as claimed in any of claims 2 to 5 further comprising at least one fluid pump (40) received in corresponding pump housing (42) mounted on and in fluid communication with the fluid hub housing (22), the fluid pump (40) adapted to circulate fluid through the fluid flow channels (24a, 24b) and the vehicle heat exchanger (10) through the vehicle coolant circuit to configure fluid communication between the fluid hub (20) and the vehicle heat exchanger (10).

7. The thermal management module (100) as claimed in any of the preceding claims, wherein the gasket (50) is over-molded with respect to at least one of the portion of the multi-way valve housing (23a) and the portion of the pump housing (42).

8. The thermal management module (100) as claimed in any of the preceding claims in dependency of claim 4, wherein the gasket (50) is over-molded with respect to the actuator housing (32).

9. The thermal management module (100) as claimed in any of the preceding claims, wherein the fluid hub housing (22) comprises a first portion (22a), the first portion (22a) comprising:
∘ the multi-way valve housing;
∘ a pump mounting portions
∘ a first set of fluid flow channels (24a) corresponding to the multi-way valve (26); and
∘ a first set of connector ports (28a).

10. The thermal management module (100) as claimed in the claim 4, wherein portions of the fluid hub housing (22) at interface between fluid hub housing (22) and at least one of the actuator housing (32) and the pump housing (42) is integrally formed with the gasket (50).

11. The thermal management module (100) as claimed in the claim 4, wherein a first gasket (50a) integrally formed on the fluid hub housing (22) is adapted to form sealing connection between the actuator housing (32) and at least one of portion of fluid hub housing (22) and the first fluid flow channels (24a) corresponding to the multi-way valve (26).

12. The thermal management module (100) as claimed in the previous claim, wherein the first gasket (50a) comprises multiple closed loops (52a, 54a, 56a) interconnected to each other.

13. The thermal management module (100) as claimed in the previous claim, wherein a first loop (52a) is arranged along the closable opening (29) and the remaining loops (54a) and (56a) are arranged along periphery of the first loop and along the first set of fluid flow channels (24a) corresponding to the multi-way valve (26).

14. The thermal management module (100) as claimed in any of preceding claims, wherein a second gasket (50b) integrally formed on the fluid hub housing (22) is adapted to form sealing connection between the pump housing (42) and a pump mounting portion (25) of the fluid hub housing (22).

15. The thermal management module (100) as claimed in the claim 4, wherein the actuator housing (32) comprises an actuator enclosing portion (32a) and a cover portion (32b) that covers an open end of the actuator enclosing portion (32a) on one side and the closable opening (29) on the opposite side thereof.
